# EUROPÄISCHE PATENTSCHRIFT

(11) **EP 2 404 005 B1**
(45) Veröffentlichungstag und Bekanntmachung des Hinweises auf die Patenterteilung: **30.07.2014**
(21) Anmeldenummer: 10711829.1
(22) Anmeldetag: 16.02.2010
(51) Int. Cl.: E04B 9/04, F24D 3/16, F24F 5/00

(54) **DECKENELEMENT**
CEILING ELEMENT
ÉLÉMENT DE PLAFOND

(30) Priorität: 04.03.2009 DE 202009002911 U
(43) Veröffentlichungstag der Anmeldung: 11.01.2012
(73) Patentinhaber: Rehau AG & Co, 95111 Rehau (DE)
(72) Erfinder: BURKHARDT, Oliver, 91054 Erlangen (DE); KOCH, Klaus, Paul, 90513 Zirndorf (DE)
(86) Internationale Anmeldenummer: PCT/EP2010/000930
(87) Internationale Veröffentlichungsnummer: WO 2010/099865

(56) Entgegenhaltungen:
- DE-A1- 4 131 797
- DE-U1- 20 011 751
- DE-U1- 29 502 445
- DE-U1- 29 608 709
- DE-U1-202006 000 201
- GB-A- 779 555
- US-B1- 6 923 248

## Beschreibung

Die Erfindung betrifft ein Deckenelement mit schallabsorbierenden Eigenschaften, umfassend erste und zweite Plattenelemente, die parallel zueinander angeordnet sind, und eine von einem Wärmeträgermedium durchströmbare Leitung, wobei das erste Plattenelement als Gipskartonplatte ausgebildet ist und ein Lochmuster aufweist.

In verschiedensten Gebäudetypen, wie beispielsweise Verwaltungs- und Bürogebäuden werden Deckensysteme installiert, die einerseits eine klimatische und andererseits eine akustische Anforderung erfüllen müssen. Nach dem Stand der Technik werden Deckenelemente hauptsächlich zur Raumtemperierung eingesetzt. In dem Zwischenraum zwischen dem abgehängten Deckensystem und der Decke werden Versorgungs- und Installationssysteme verlegt, die unter anderem das Rohrsystem für das Kühl- oder Heizmittel der Deckenelemente führen.

Beispielsweise beschreibt die US 6,923,248 B1 eine Kühldecke mit Kühlrohren, die mittels eines Tragsystems an einer bestehenden Decke angebracht sind, wobei die Kühlrohre innerhalb einer Sandwich-Konstruktion mit oberen und unteren, feuerhemmenden Trockenbauplatten (wie Gipskartonplatten oder Gipsfaserplatten) zwischen Abstandshaltern angeordnet sind, die sich zwischen oberen und unteren Trockenbauplatten befinden, wobei die oberen Platten wahlweise mit einer Wärmesperre versehen sind und wobei die Kühlrohre in Form von aneinander angeschlossenen Kühlrohrmatten vorgesehen und in flachen Hohlräumen angeordnet sind, die durch die Abstandshalter zwischen den oberen und unteren Trockenbauplatten gebildet sind. In Fig. 12 der US 6,923,248 B1 ist angedeutet, die untere Trockenbauplatte mit einem Lochmuster zu versehen, wobei sich die Löcher bis zur Kühlrohrmatte erstrecken. Durch die Anordnung dieser Löcher soll eine gute Kühlwirkung erzielt werden.

Die DE 41 31 797 A1 beschreibt ein Flächenelement für die Raumklimatisierung mit von einem Heiz- oder Kühlmedium durchströmten Kanälen, wobei die Kanäle in einer wärmeleitenden Schicht zwischen Plattenelementen ausgebildet sind. Dabei kann die Sichtplatte im Bereich zwischen den Kanälen bzw. Rohrleitungen gelocht und im Bereich der Lochung mit einem schallschluckenden Material zwischen den Platten versehen sein.

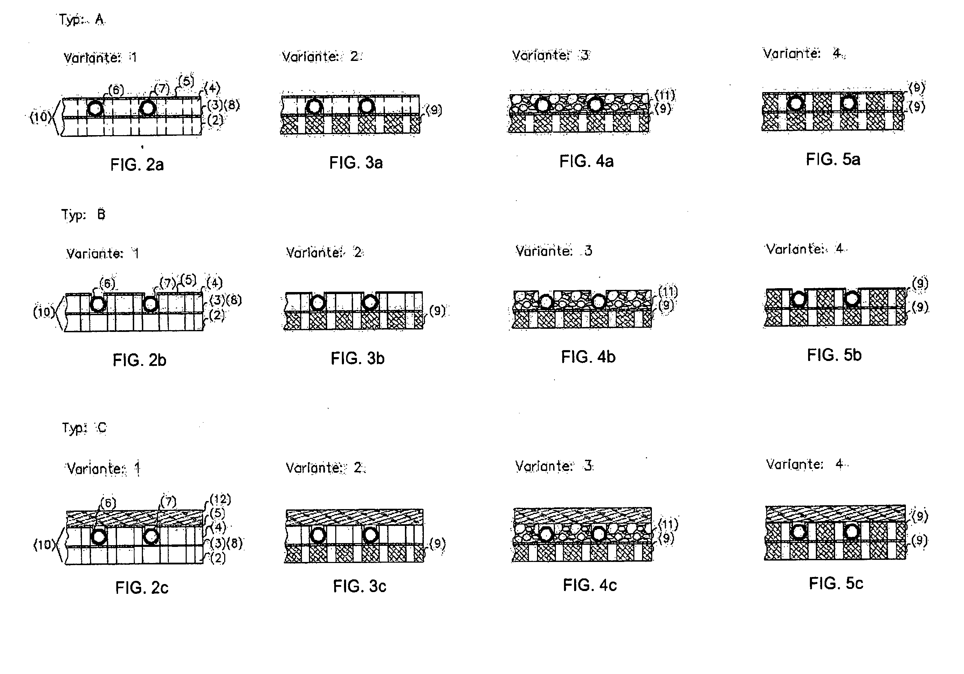

Darüber hinaus offenbart die DE 20 2006 000 201 U1 ein Raumelement zur decken- oder wandseitigen Befestigung, das als Schichtkörper ausgebildet ist und mindestens eine außenliegende Tragschale sowie eine Funktionsschicht umfasst, wobei die Tragschale eine Bauplatte und die Funktionsschicht eine Einlage aus schadstoffreduzierendem, lose gehaltenem Material, insbesondere aus Zeolith umfasst. Gemäß der in Fig. 2 gezeigten Ausführungsform ist das Raumelement plattenförmig ausgebildet, wobei die raumseitige Bauplatte mit Löchern versehen ist, die lediglich in der Bauplatte vorhanden sind. In der sich daran anschließenden offenporigen Dämmschicht sind Rohrleitungen als Heiz- oder Kühlelement vorgesehen, wobei sich an die offenporigen Dämmschicht die schadstoffreduzierende Einlage anschließt.

Ein gattungsgemäßes Deckenelement wird in der Druckschrift EP 1 170 553 B1 beschrieben. Dieses Deckenelement ist mit akustischen Eigenschaften ausgestattet, wobei in einem Sandwichaufbau eine Bauplatte aus Gipskarton mit Lochmuster mit einer rückseitigen Mineralfaserplatte kombiniert wird. In den Stegen zwischen den Löchern des Lochmusters der Gipskartonbauplatte werden vorder- oder rückseitig Nuten eingefräst, damit ein sauerstoffdichter Temperiermittelschlauch in Schlaufen oder Mäandern hineingelegt werden kann. Die akustischen Eigenschaften werden durch die Nutzung des Musters bzw. nach der Auswahl oder der Art des Lochmusters und den rückseitig aufgebrachten Schallabsorptionswerkstoff realisiert.

Nachteilig an dem aus der Druckschrift EP 1 170 553 B1 bekannten Deckenelement ist, dass die Mineralfaserplatte ein weicher komprimierbarer Werkstoff ist, der bei einer direkten Befestigung an der Unterkonstruktion durch die Anzugskraft der Schraube zusammengepresst wird. Eine unebene geschlossene Deckenunteransicht wäre die Folge, bei der ein erhöhter Spachtelaufwand entsteht.

Zudem ist die Eigensteifigkeit des Elementes ohne zusätzliche gelochte Metallplatte ungewiss, da die Stege zwischen den musterhaften Vertiefungen gefräst werden und somit das gesamte Element an Querstabilität verliert. Weiterhin wird gemäß dem Stand der Technik der Temperiermittelschlauch in der unteren sichtseitig zugewandten Gipskartonplatte verlegt. Im Umlenkungsbereich des schlaufen- oder mäanderförmigen Verlaufs darf der Schlauch nicht geknickt werden, damit ein Temperiermitteldurchfluss gewährleistet werden kann. Die Schlauchsteifigkeiten hierfür geben den maximalen Biegeradius vor. Somit ist es bei verschiedenen Lochmustern nicht möglich, dass der Temperiermittelschlauch sichtseitig komplett verdeckt bleibt. Eine hervortretende Rohrleitung oder ein hervortretender Temperiermittelschlauch in einer geschlossenen Deckenunteransicht speziell im Umlenkbereich ist die Folge und stößt auf Null Akzeptanz seitens des Architekten bzw. des Endkunden.

Der Erfindung liegt die Aufgabe zugrunde, das gattungsgemäße Deckenelemente dahingehend weiterzubilden, dass die schallabsorbierenden Eigenschaften deutlich verbessert werden und die Stabilität des Deckenelementes deutlich erhöht wird.

Um die der Erfindung zugrunde gelegte Aufgabe zu lösen, ist erfindungsgemäß vorgesehen, dass die Leitung sich zumindest abschnittsweise innerhalb des zweiten Plattenelementes erstreckt. Bestimmungsgemäß wird das erfindungsgemäße Deckenelement derart montiert, dass das erste Plattenelement einem Raum und das zweite Deckenelement einer Raumdecke zugewandt ist. Die gelochte Gipskartonplatte, die das erste Plattenelement bildet, besitzt selbst bereits eine sehr gute Schallabsorption und wird durch das zweite Plattenelement sowohl im Hinblick auf die schallabsorbierenden Eigenschaften als auch im Hinblick auf die Stabilität unterstützt. Das bereits mit einem Lochmuster versehene erste Plattenelement muss zur Unterbringung der Leitung nicht weiter geschwächt werden, da sich die Leitung innerhalb des zweiten Plattenelementes erstreckt. Es ist bevorzugt, die Leitung innerhalb des zweiten Plattenelementes derart anzuordnen, dass die Leitung weder über eine dem ersten Plattenelement zugewandte, noch über eine davon abgewandte Seite des zweiten Plattenelements hervortritt und sichtseitig komplett verdeckt bleibt. Im Ergebnis werden die der Erfindung zugrunde gelegten Aufgaben gelöst. Das erfindungsgemäße Deckenelement mit schallabsorbierenden Eigenschaften ist besonders wirksam im Frequenzbereich 250 - 8000 Hz. Weiter ist es erfindungsgemäß vorgesehen, dass die ersten und zweiten Plattenelemente mit identischen Lochmustern versehen sind und so zueinander ausgerichtet sind, dass die Löcher der Lochmuster übereinander liegen. Dadurch kann Schall weiter in das Deckenelement vordringen und noch besser absorbiert werden. Im Ergebnis werden die schallabsorbierenden Eigenschaften des Deckenelementes noch weiter verbessert.

Bevorzugte Ausführungen wurden in den Unteransprüchen beansprucht.

Es kann sich als hilfreich erweisen, wenn zwischen dem ersten und dem zweiten Profilelement eine Textilschicht angeordnet ist. Die Textilschicht kann die schallabsorbierenden Eigenschaften des Deckenelementes weiter verbessern und zusätzlich als Sichtschutz eingesetzt werden, um darauffolgende Schichten sichtseitig zu verdecken. Als Textilschicht wird vorzugsweise ein Vlies mit einer Materialstärke zwischen 0,1 und 2,0 mm und einem Flächengewicht von 50 bis 500 g/m² eingesetzt.

Es kann sich als vorteilhaft erweisen, wenn auf der von dem ersten Plattenelement abgewandten Seite des zweiten Plattenelementes eine weitere Textilschicht angeordnet ist. Diese weitere Textilschicht kann die schallabsorbierenden Eigenschaften des Deckenelementes weiter verbessern. Zudem kann diese weitere Textilschicht genutzt werden, um das Deckenelement zur Deckenseite hin zu isolieren. Alternativ oder zusätzlich ist eine Isolierschicht aus isolierendem Material auf der vom ersten Plattenelement abgewandten Seite des zweiten Plattenelements vorgesehen. Als zweite Textilschicht wird vorzugsweise ebenfalls ein Vlies mit einer Materialstärke zwischen 0,1 und 2,0 mm und einem Flächengewicht von 50 bis 500 g/m² eingesetzt.

Es kann sich als praktisch erweisen, wenn die Leitung in einer Nut angeordnet ist, die in das zweite Plattenelement eingebracht ist. Die Leitung weist vorzugsweise einen kreisförmigen Querschnitt auf. Des Weiteren kann die Leitung schleifenförmig, spiralförmig oder mäanderförmig verlegt werden kann. Der Wärmeübergang zwischen einem kreisförmigen Querschnitt und einem im Wesentlichen flachen Element, wie dem zweiten Plattenelement, ist im Allgemeinen ungünstig. Durch das Anordnen der Leitung in einer Nut, kann ein Wärmeübergang zwischen der Leitung und dem zweiten Plattenelement erheblich verbessert werden. Dazu kann es hilfreich sein, wenn die Leitung das zweite Plattenelement über wenigstens ein Viertel, vorzugsweise über die Hälfte, bevorzugt mehr als über die Hälfte des Leitungsumfangs kontaktiert.

Nach oben hin kann die Nut durch eine aushärtbare Masse, wie z. B. Kunststoff, Gips, Spachtelmasse oder dgl. abgedeckt werden, sodass der Wärmeübergang zwischen der Leitung und dem zweiten Plattenelement noch weiter verbessert werden kann. Die Nut wird bevorzugt in das zweite Plattenelement eingefräst.

Es kann sich als günstig herausstellen, wenn die Nut in einer von dem ersten Plattenelement abgewandten Seite des zweiten Plattenelementes eingebracht ist. Dadurch kann die Leitung nach dem Zusammenfügen des Verbundes, bestehend aus den zwei Plattenelementen, noch in das zweite Plattenelement eingebracht werden. Eine rückseitige Kaschierung des zweiten Plattenelementes ist nicht erforderlich, da das zweite Plattenelement bestimmungsgemäß einer Raumdecke zugewandt ist. Dadurch kann die Fertigung des Deckenelementes vereinfacht werden.

Es kann sich aber auch als günstig herausstellen, wenn die Nut in einer dem ersten Plattenelement zugewandten Seite des zweiten Plattenelementes eingebracht ist. Dadurch ist es erforderlich, die Nut und die Leitung vor dem Zusammenfügen der beiden Plattenelemente in das zweite Plattenelement einzubringen. Dadurch kann jedoch verhindert werden, dass die Leitung überhaupt sichtbar nach außen in Erscheinung tritt, weil die Nut durch das erste Plattenelement verdeckt wird. Im Ergebnis wird die Leitung fest und insbesondere formschlüssig in das Deckenelement eingebunden und wird unverlierbar am Deckenelement gehalten. Vorzugsweise stehen lediglich die Leitungsanschlüsse bzw. ein Leitungseingang und ein Leitungsausgang, sichtbar nach außen hervor, und können bestimmungsgemäß an ein Klimaaggregat, welches die Leitung mit einem erhitzten oder gekühlten Wärmeträgermedium, z. B. Wasser, beschickt, gekoppelt werden.

Es kann sich als vorteilhaft herausstellen, wenn die Nut zumindest in den geraden Nutabschnitten, vorzugsweise auch in den gekrümmten Nutabschnitten, zwischen den Löchern des Lochmusters verläuft. Zwischen den Löchern des Lochmusters des zweiten Plattenelementes sind Stege ausgebildet, welche durch ihre Stärke die Querstabilität des Plattenelementes maßgeblich mitbestimmen. Wird die Leitung zwischen dem Lochmuster bzw. in den Stegen verlegt, so ist jederzeit ein guter Wärmeübergang zwischen der Leitung und dem zweiten Plattenelement gewährleistet. Außerdem tritt die Leitung nicht über die Löcher sichtbar nach außen in Erscheinung. Des Weiteren beeinflusst die Leitung die akustischen Eigenschaften des Deckenelementes nur sehr wenig bis gar nicht.

Es kann sich als praktisch herausstellen, wenn die Textilschicht die Löcher des Lochmusters verdeckt. Dies kann das Lochmuster des ersten und/oder des zweiten Plattenelementes bzw. die zugehörige Textilschicht betreffen. Die Textilschicht erhöht die schallabsorbierende Wirkung des Deckenelementes und dient gleichzeitig als Sichtschutz, sodass die hinter der Textilschicht angeordneten Schichten nicht durch die Löcher des Lochmusters sichtbar sind.

Es kann hilfreich sein, wenn zwischen dem ersten und zweiten Plattenelement ein Wärmeleitelement angeordnet ist. Insbesondere in dem Fall, in welchem die Nut in einer dem ersten Plattenelement zugewandten Seite zweiten Plattenelements eingebracht ist, kann das Wärmeleitelement eine über die Leitung zugeführte Wärmeenergie gleichmäßig über das erste Plattenelement verteilen und einen lokalen Wärmeeintrag, z.B. nur an den zur Leitung benachbarten Stellen des ersten Plattenelementes, verhindern. Daraus folgt, dass eine über die Leitung zugeführte Wärmeenergie unter Verwendung des Wärmeleitelementes gleichmäßig über das erste Plattenelement verteilt werden kann und somit das erste Plattenelement großflächig mit der Umgebung Wärme austauschen kann. Das Wärmeleitelement weist vorzugsweise denselben Umriss und/oder dasselbe Lochmuster auf wie das erste und/oder das zweite Plattenelement, und ist vorzugsweise aus Metall oder einem anderen thermisch leitenden Werkstoff plattenförmig ausgebildet.

Es kann praktisch sein, wenn das zweite Plattenelement als Gipskartonplatte ausgebildet ist. Eine Gipskartonplatte weist hervorragende strukturelle sowie schallabsorbierende Eigenschaften auf. Durch die Verwendung einer Gipskartonplatte als zweites Plattenelement kann somit die Steifigkeit und die schallabsorbierende Wirkung des Deckenelementes weiter verbessert werden.

Es kann aber auch nützlich sein, wenn das zweite Plattenelement eine Schaumstruktur oder eine schaumähnliche Struktur aufweist, vorzugsweise als Blähglasplatte oder als Schaumglasplatte ausgebildet ist. Eine Schaumglasplatte bzw. Blähglasplatte besitzt selbst eine sehr gute Schallabsorptionseigenschaft. Wird diese Blähglasplatte mit einer ein Lochmuster aufweisenden Gipskartonplatte, wie sie im ersten Plattenelement vorliegt, kombiniert, ist eine sehr gute Schallabsorption zu erwarten. Bei einem derartigen Sandwichaufbau kann wahlweise auf eine Textilschicht zwischen dem ersten und dem zweiten Plattenelement (Zwischenvlies) verzichtet werden.

Die Schaumglasplatte umfasst vorzugsweise eine Wärmeleitfähigkeit im Bereich von 0,06 bis 0,08 W/mK und eine Druckfestigkeit im Bereich von 1,0 bis 4,0 N/mm².

Es kann ferner nützlich sein, wenn das erste und/oder das zweite Plattenelement Zusatzstoffe zur Erhöhung der Wärmeleitfähigkeit enthält. Zur Erhöhung der Wärmeleitfähigkeit kann beispielsweise Graphit als Zusatzstoff beigemischt werden. Dadurch wird die Wärmeleitfähigkeit des Deckenelementes in den Plattenebenen erheblich verbessert, sodass großflächig erhebliche Wärmemengen zwischen den Plattenelementen selbst und zwischen dem ersten Plattenelement und der Umgebung ausgetauscht werden können. Grundsätzlich sollte das erste und/oder das zweite Plattenelement eine Wärmeleitfähigkeit größer als 0,2 W/mK, vorzugsweise im Bereich zwischen 0,2 W/mK und 0,5 W/mK aufweisen. Das Material des ersten und/oder des zweiten Plattenelements kann organisch, anorganisch und/oder mineralisch sein. Beispielsweise kann als das erste und/oder das zweite Plattenelement eine Gipskartonplatte mit Graphitanteilen zwischen 5 und 25 Gew-%, vorzugsweise zwischen 15 und 20 Gew-%, eingesetzt werden. Die Gipskartonplatte weist ohne Graphitanteile einen Wärmeleitwert im Bereich von 0,25 W/mK auf. Mit einem Graphitanteil zwischen 5 und 25 Gew-% ergibt sich ein Wärmeleitwert der Gipskartonplatte im Bereich von 0,52 W/mK. Wahlweise kann dieser Gewichtsanteil durch Metallfaser und/oder -pulver ersetzt werden.

Darüber hinaus kann es nützlich sein, wenn eine Isolierung rückseitig auf das Deckenelement aufgebracht wird. Das Aufbringen der Isolierung auf das Deckenelement kann dabei flächig oder in Streifen mit Montagevorrichtung erfolgen. Das Material für die Isolierung kann aus organischen, anorganischen und mineralischen Materialien sowie Gemischen daraus ausgewählt sein. Vorzugsweise besitzt das Material der Isolierung eine Wärmeleitfähigkeit im Bereich von 0,01 bis 0,10 W/mK, stärker bevorzugt im Bereich von 0,02 bis 0,08 W/mK. Die Isolierung ist bevorzugt derart ausgebildet, dass sie die schallisolierenden Eigenschaften des Deckenelements unterstützt.

Es kann günstig sein, wenn die ersten und zweiten Plattenelemente stoffschlüssig und/oder formschlüssig verbunden sind. Ein derartiger Verbund weist hervorragende strukturelle Eigenschaften auf. Des Weiteren ist durch das formschlüssige Verbinden zweier gleichharter Werkstoffe in Sandwichbauweise ein komplexer und stabiler Aufbau vorhanden, der sehr gut geeignet ist, um eine glatte, ebene und geschlossene Deckenunteransicht ohne erhöhten Spachtelaufwand zu erstellen.

Die bevorzugten Ausführungsbeispiele der Erfindung sowie die bevorzugte Anwendung des erfindungsgemäßen Deckenelementes werden nachstehend mit Bezug auf die beigefügten Zeichnungen beschrieben.

### Kurze Beschreibung der Figuren

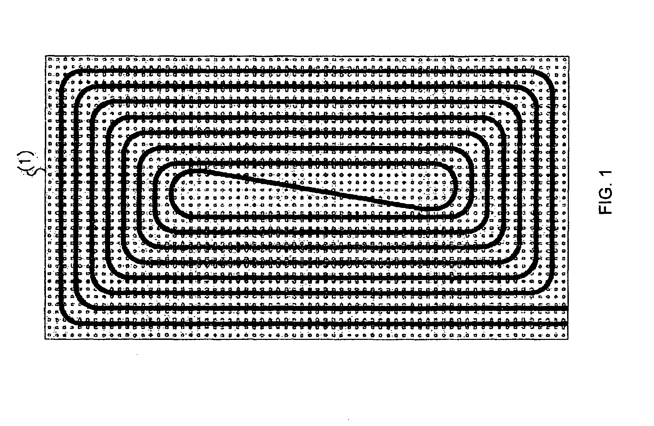

- Fig. 1: zeigt eine Draufsicht auf ein erfindungsgemäßes Deckenelement, wobei eine die Leitung aufnehmende Nut in einer vom ersten Plattenelement abgewandten Seite des zweiten Plattenelementes eingebracht ist.
- Fig. 2a: zeigt eine erste Variante des Typs A des erfindungsgemäßen Deckenelementes, wobei die zwei Plattenelemente als Gipskartonplatten ausgebildet sind und eine die Leitung aufnehmende Nut in einer dem ersten Plattenelement zugewandten Seite des zweiten Plattenelementes eingebracht ist..
- Fig. 2b: zeigt eine erste Variante des Typs B des erfindungsgemäßen Deckenelementes, wobei die ersten und zweiten Plattenelemente als Gipskartonplatten ausgebildet sind und eine die Leitung aufnehmende Nut in einer von dem ersten Plattenelement abgewandten Seite des zweiten Plattenelementes eingebracht ist.
- Fig. 2c: zeigt eine erste Variante des Typs C des erfindungsgemäßen Deckenelementes, wobei die ersten und zweiten Plattenelemente als Gipskartonplatten ausgebildet sind, eine die Leitung aufnehmende Nut in einer von dem ersten Plattenelement abgewandten Seite des zweiten Plattenelementes eingebracht ist und eine thermische Isolierung auf die von dem ersten Plattenelement abgewandten Seite des zweiten Plattenelementes aufgebracht ist.
- Fig. 3a: zeigt eine zweite Variante des Typs A des erfindungsgemäßen Deckenelementes, wobei das erste Plattenelement als graphithaltige Gipskartonplatte ausgebildet ist und das zweite Plattenelement als Gipskartonplatte ausgebildet ist, wobei eine die Leitung aufnehmende Nut in einer dem ersten Plattenelement zugewandten Seite des zweiten Plattenelementes eingebracht ist.
- Fig. 3b: zeigt eine zweite Variante des Typs B des erfindungsgemäßen Deckenelementes, wobei das erste Plattenelement als graphithaltige Gipskartonplatte ausgebildet und das zweite Plattenelement als Gipskartonplatte ausgebildet ist, wobei eine die Leitung aufnehmende Nut in einer von dem ersten Plattenelement abgewandten Seite des zweiten Plattenelementes eingebracht ist.
- Fig. 3c: zeigt eine zweite Variante des Typs C des erfindungsgemäßen Deckenelementes, wobei das erste Plattenelement als graphithaltige Gipskartonplatte ausgebildet und das zweite Plattenelement als Gipskartonplatte ausgebildet ist, wobei eine die Leitung aufnehmende Nut in einer von dem ersten Plattenelement abgewandten Seite des zweiten Plattenelementes eingebracht ist und eine thermische Isolierung auf die von dem ersten Plattenelement abgewandten Seite des zweiten Plattenelementes aufgebracht ist.
- Fig. 4a: zeigt eine dritte Variante des Typs A des erfindungsgemäßen Deckenelementes, wobei das erste Plattenelement als graphithaltige Gipskartonplatte ausgebildet ist und das zweite Plattenelement als Blähglasplatte ausgebildet ist, wobei eine die Leitung aufnehmende Nut in einer dem ersten Plattenelement zugewandten Seite des zweiten Plattenelementes eingebracht ist.
- Fig. 4b: zeigt eine dritte Variante des Typs B des erfindungsgemäßen Deckenelementes, wobei das erste Plattenelement als graphithaltige Gipskartonplatte ausgebildet ist und das zweite Plattenelement als Blähglasplatte ausgebildet ist, wobei eine die Leitung aufnehmende Nut in einer von dem ersten Plattenelement abgewandten Seite des zweiten Plattenelementes eingebracht ist.
- Fig. 4c: zeigt eine dritte Variante des Typs C des erfindungsgemäßen Deckenelementes, wobei das erste Plattenelement als graphithaltige Gipskartonplatte ausgebildet ist und das zweite Plattenelement als Blähglasplatte ausgebildet ist, wobei eine die Leitung aufnehmende Nut in einer von dem ersten Plattenelement abgewandten Seite des zweiten Plattenelementes eingebracht ist und eine thermische Isolierung auf die von dem ersten Plattenelement abgewandten Seite des zweiten Plattenelementes aufgebracht ist.
- Fig. 5a: zeigt eine vierte Variante des Typs A des erfindungsgemäßen Deckenelementes, wobei das erste und das zweite Plattenelement als graphithaltige Gipskartonplatte ausgebildet sind, wobei eine die Leitung aufnehmende Nut in einer dem ersten Plattenelement zugewandten Seite des zweiten Plattenelementes eingebracht ist.
- Fig. 5b: zeigt eine vierte Variante des Typs B des erfindungsgemäßen Deckenelementes, wobei das erste und das zweite Plattenelement als graphithaltige Gipskartonplatte ausgebildet sind, wobei eine die Leitung aufnehmende Nut in einer dem ersten Plattenelement abgewandten Seite des zweiten Plattenelementes eingebracht ist.
- Fig. 5c: zeigt eine vierte Variante des Typs C des erfindungsgemäßen Deckenelementes, wobei das erste und das zweite Plattenelement als graphithaltige Gipskartonplatten ausgebildet sind, wobei eine die Leitung aufnehmende Nut in einer dem ersten Plattenelement abgewandten Seite des zweiten Plattenelementes eingebracht ist und wobei eine thermische Isolierung auf die von dem ersten Plattenelement abgewandten Seite des zweiten Plattenelementes aufgebracht ist.

### Detaillierte Beschreibung der bevorzugten Ausführungsbeispiele

Fig. 1 zeigt eine Draufsicht auf das erfindungsgemäße Deckenelement 1 mit schallabsorbierenden Eigenschaften, dessen Aufbau nachfolgend beschrieben wird.

Zunächst wird auf die Gemeinsamkeiten des erfindungsgemäßen Deckenelementes 1 eingegangen, bevor die Unterschiede der einzelnen Varianten und Ausgestaltungsformen des erfindungsgemäßen Deckenelementes gesondert hervorgehoben werden.

Das erfindungsgemäße Deckenelement 1 mit schallabsorbierenden Eigenschaften umfasst erste und zweite Plattenelemente 2, 4, die parallel zueinander angeordnet sind und eine von einem Wärmeträgermedium durchströmbare Leitung 7, wobei das erste Plattenelement 2 als Gipskartonplatte ausgebildet ist und ein Lochmuster aufweist.

Der Umriss der Plattenelemente 2, 4 in der Plattenebene ist keinerlei Beschränkungen unterlegen. Bevorzugt wird jedoch eine Ausgestaltung, wobei die ersten und zweiten Plattenelemente 2, 4 identische Umrisse aufweisen. Bevorzugt sind die ersten und zweiten Plattenelemente 2, 4 rechteckig ausgebildet und mit identischen Lochmustern versehen, wobei die Plattenelemente 2, 4 so zueinander ausgerichtet sind, dass die Löcher der Lochmuster übereinander liegen. Die längere Seite des Rechtecks ist vorzugsweise etwa doppelt so lang wie die kürzere Seite des Rechtecks, und die kürzere Seite des Rechtecks entspricht vorzugsweise in etwa der 5 bis 20-fachen Dicke des Deckenelementes 1.

Fig. 2a zeigt eine erste Variante des Typs A des erfindungsgemäßen Deckenelementes 1, wobei die ersten und zweiten Plattenelemente 2, 4 als Gipskartonplatten mit identischen Lochmustern ausgebildet sind, wobei zwischen den ersten und zweiten Plattenelementen 2, 4 und auf einer vom ersten Plattenelement 2 abgewandten Seite des zweiten Plattenelementes 4 jeweils eine Textilschicht in Gestalt eines Akustikvlieses angeordnet ist. Eine die Leitung 7 aufnehmende Nut 6 ist in einer dem ersten Plattenelement 2 zugewandten Seite des zweiten Plattenelementes 4 eingebracht. Die Nut 6 verläuft in etwa spiralförmig zwischen dem Lochmuster, das beispielsweise in Fig. 1 zu erkennen ist. Es ist nicht erforderlich, wenngleich bevorzugt, dass die Nut 6 bzw. die Leitung 7 vollständig zwischen den Löchern des Lochmusters verläuft, weil die zwischenliegende Textilschicht 3 die Leitung 7 sichtbar nach außen verdeckt. Eine die Leitung 7 aufnehmende Nut 6 ist vorzugsweise derart ausgebildet, dass die Leitung 7 über mindestens ein Viertel, vorzugsweise über die Hälfte, bevorzugt über mehr als die Hälfte des Leitungsumfangs das zweite Plattenelement 4 kontaktiert. Dadurch kann ein guter Wärmeübergang zwischen der Leitung 7 und dem zweiten Plattenelement 4 gewährleistet werden. Die Leitung 7 ist vorzugsweise derart in das zweite Plattenelement 4 eingebettet, dass die Nut 6 mit einer formbaren, aushärtbaren Masse, beispielsweise Kunststoff, Gips, Zement, Spachtelmasse oder dgl., abgedeckt ist, sodass die dem ersten Plattenelement 2 zugewandte Seite des zweiten Plattenelementes 4 im Wesentlichen durchgehend eben ist.

Zur Herstellung des erfindungsgemäßen Deckenelementes 1 gemäß der ersten Variante des Typs A werden zwei identische Gipskartonplatten mit identischem Umriss, Lochmuster und aufgebrachter Textilschicht 3 bzw. 5 bereitgestellt. In die nicht mit einer Textilschicht 5 versehene Seite des zweiten Plattenelementes 4 wird gemäß dem Beispiel in Fig. 1 eine schleifenförmige Nut 6 eingefräst, in welcher die Leitung 7 positioniert wird, sodass ein Leitungseingang sowie ein Leitungsausgang zum Anschluss an ein herkömmliches Klimaaggregat zugänglich sind. Die ersten und zweiten Plattenelemente 2, 4 werden bestimmungsgemäß gemäß der Darstellungen Fig. 2a parallel übereinander angeordnet und zum Beispiel über eine randseitige Einfassung in der Gestalt von U-profilförmigen Rahmenelementen formschlüssig miteinander verbunden.

Das erfindungsgemäße Deckenelement 1 gemäß der ersten Variante des Typs B unterscheidet sich von dem erfindungsgemäßen Deckenelement gemäß Fig. 2a lediglich darin, dass eine die Leitung 7 aufnehmende Nut 6 in einer von dem ersten Plattenelement 2 abgewandten Seite des zweiten Plattenelementes 4 eingebracht ist (Fig. 2b). Das Einbringen der Nut 6 kann dabei wahlweise nach oder vor dem Aufbringen der Textilschicht 5 oder wahlweise vor oder nach dem Zusammenfügen der ersten und zweiten Plattenelemente 2, 4 zu einem zusammenhängenden Verbund bewerkstelligt werden. Ansonsten ist der Aufbau dieses erfindungsgemäßen Deckenelementes 1 identisch zu dem Aufbau des erfindungsgemäßen Deckenelementes 1 gemäß Fig. 2a. Um Wiederholungen zu vermeiden, wird auf die vorangegangene Beschreibung Bezug genommen und es werden dieselben Bezugszeichen verwendet.

Das erfindungsgemäße Deckenelement 1 gemäß der ersten Variante des Typs C unterscheidet sich von dem erfindungsgemäßen Deckenelement gemäß Fig. 2b lediglich darin, dass eine thermische Isolierung 12 auf die von dem ersten Plattenelement abgewandten Seite des zweiten Plattenelementes 4 aufgebracht ist (Fig. 2c). Das Aufbringen der Isolierung 12 kann dabei nach dem Aufbringen der Textilschicht 5 oder wahlweise vor oder nach dem Zusammenfügen der ersten und zweiten Plattenelemente 2, 4 zu einem zusammenhängenden Verbund erfolgen. Dabei kann das Aufbringen der Isolierung 12 auf das Deckenelement 1 flächig oder in Streifen mit Montagevorrichtung erfolgen. Das Material für die Isolierung 12 kann aus organischen, anorganischen und mineralischen Materialien sowie Gemischen daraus ausgewählt sein. Vorzugsweise besitzt das Material der Isolierung 12 eine Wärmeleitfähigkeit im Bereich von 0,01 bis 0,10 W/mK, stärker bevorzugt im Bereich von 0,02 bis 0,08 W/mK.

Die Isolierung 12 ist bevorzugt derart ausgebildet, dass sie die schallisolierenden Eigenschaften des Deckenelements 1 unterstützt. Ansonsten ist der Aufbau dieses erfindungsgemäßen Deckenelementes 1 identisch zu dem Aufbau des erfindungsgemäßen Deckenelementes 1 gemäß Fig. 2b. Um Wiederholungen zu vermeiden, wird auf die vorangegangene Beschreibung Bezug genommen und es werden dieselben Bezugszeichen verwendet.

Die erfindungsgemäßen Deckenelemente 1 gemäß den Figuren 3a, 3b und 3c sind identisch zu denjenigen gemäß den Fig. 2a, 2b bzw. Fig. 2c, mit der Ausnahme, dass das erste Plattenelement 2 zusätzlich Zusatzstoffe zur Erhöhung der Wärmeleitfähigkeit in Gestalt von gelagerten Graphitpartikeln enthält. Das erste Plattenelement 2 wird daher mit Schraffur dargestellt. Um Wiederholungen zu vermeiden, wird auf die obige Beschreibung Bezug genommen und es werden dieselben Bezugszeichen verwendet.

Die erfindungsgemäßen Deckenelemente 1 gemäß den Figuren 4a, 4b und 4c sind im Wesentlichen identisch zu den erfindungsgemäßen Deckenelementen 1 gemäß den Figuren 3a, 3b bzw. Fig. 3c, mit der Ausnahme, dass das zweite Plattenelement 4 als Blähglasplatte ausgebildet ist und die Textilschicht 5 auf einer von dem ersten Plattenelement 2 abgewandten Seite des zweiten Plattenelementes 4 weggelassen wurde. Um Wiederholungen zu vermeiden, wird auf die vorangegangene Beschreibung Bezug genommen, und es werden dieselben Bezugszeichen verwendet.

Die erfindungsgemäßen Deckenelemente 1 gemäß den Figuren 5a, 5b und 5c sind im Wesentlichen identisch zu den erfindungsgemäßen Deckenelementen 1 gemäß den Figuren 3a, 3b bzw. Fig. 3c, mit der Ausnahme, dass das erste Plattenelement 2 und das zweite Plattenelement 4 als graphithaltige Gipskartonplatten ausgebildet sind. Um Wiederholungen zu vermeiden, wird auf die vorangegangene Beschreibung Bezug genommen, und es werden dieselben Bezugszeichen verwendet.

Die bevorzugten Herstellungsmethoden und Anwendungen des Deckenelements 1 werden nachfolgend beschrieben.

In den bevorzugten Ausführungsformen gemäß Fig. 2a weist das erfindungsgemäße Deckenelement eine gelochte untere Gipskartonplatte 2 auf, die rückseitig mit einem dünnen Vlies 3 kaschiert ist. Die vliesbehaftete Rückseite wird mit der Vorderseite einer weiteren oberen Gipskartonplatte 4 gleicher Lochung formschlüssig und lochübereinstimmend verbunden, sodass ein komplexer Verbundaufbau in Sandwichbauweise entsteht. Die Rückseite der oberen Gipskartonplatte 4 ist ebenfalls mit einem dünnen Vlies 5 kaschiert. In die rückseitig und somit dem Raum abgewandte obere Gipskartonplatte 4 wird vorder- (Typ A; Fig. 2a) oder hinterseitig (Typ B; Fig. 2b) eine schlaufen- oder meanderförmige Nut 6 hineingefräst, damit ein sauerstoffdiffusionsdichtes Kunststoffrohr 7 eingelegt werden kann. Hierbei muss die Position der Nut 6 nicht zwingend zwischen dem Lochmuster liegen. Die Nut ist vorteilhafterweise so geartet, dass ein maximaler Halt des Kunststoffrohres 7 gewährleistet ist und der daraus resultierende Wärmeübergang vom Rohr 7 an die Gipskartonplatte 4 optimal ist. Die obere Gipskartonplatte 4 übernimmt den Halt des Rohres 7, wohingegen die untere Gipskartonplatte 2 die Stabilität übernimmt. Somit erhält das gesamte Deckenelement 1 durch den Formschluss eine gewisse Grund- und Eigenstabilität. Zusätzlich kann das verlegte Rohr 7 in der oberen raumabgewandten Gipskartonplatte 4 sichtseitig nicht hervortreten, da es einerseits die untere Platte 2 nicht direkt berührt und andererseits das rückseitig aufkaschierte Vlies 3 der unteren Platte 2 den darüberliegenden Aufbau verdeckt.

Für einen verbesserten Wärmeübergang bzw. eine homogeneren Querverteilung wird wahlweise anstelle des unteren Vlieses 3 oder zusätzlich eine Wärmeleitebene 8 zwischen den beiden Gipskartonplatten 2, 4 eingebracht, die die akustischen Eigenschaften des Deckenelementes 1 nicht beeinflusst. Weiterhin ist wahlweise anstelle der unteren Gipskartonplatte 2 eine graphithaltige Gipskartonplatte vorgesehen, um eine höhere spezifische Leistung und einen gerichteten Wärmefluss in Richtung des Raumes zu erhalten. Der Gipskarton ist ein harter Werkstoff, der durch die Anzugskräfte einer Schraube an der Unterkonstruktion nicht komprimiert werden kann. Dadurch entstehen beim Erstellen einer geschlossenen Decke keine Unebenheiten, die nachträglich aufwendig ausgearbeitet werden müssten.

Das erfindungsgemäße Deckenelement 1 zeichnet sich durch sehr gute akustische Eigenschaften aus, da die gelochten Gipskartonplatten 2, 4 mit rückseitig aufkaschiertem Vlies 3, 5 selbst bereits eine Schallabsorption besitzen und in Sandwichbauweise unter Nutzung von zwei Vliesen 3, 5 eine hervorragende Schallabsorption ergeben. Des Weiteren ist durch das formschlüssige Verbinden zweier gleichharter Werkstoffe in Sandwichbauweise ein komplexer und stabiler Aufbau vorhanden, der sehr gut geeignet ist, um eine glatte, ebene und geschlossene Deckenunteransicht ohne erhöhten Spachtelaufwand zu erstellen. Zusätzlich wird durch das Fräsen der oberen raumabgewandten Platte 4 das Rohr 7 vom Vlies 3 der vorderseitigen Platte 2 verdeckt, sodass ein Durchschimmern des Rohres 7 nicht möglich ist.

Das erfindungsgemäße Deckenelement 1 kann rückseitig, d.h. auf einer von dem ersten Plattenelement 2 abgewandten Seite eine Isolierschicht aufweisen, die auf die Textilschicht 5 bzw. auf das zweite Plattenelement 4 aufgelegt oder aufgeklebt werden kann.

## Patentansprüche

1. Deckenelement (1) mit schallabsorbierenden Eigenschaften, umfassend erste und zweite Plattenelemente (2, 4), die parallel zueinander angeordnet sind, und eine von einem Wärmeträgermedium durchströmbare Leitung (7), wobei das erste Plattenelement (2) als Gipskartonplatte ausgebildet ist und ein Lochmuster aufweist, **dadurch gekennzeichnet, dass** die Leitung (7) sich zumindest abschnittsweise innerhalb des zweiten Plattenelements (4) erstreckt und die ersten und zweiten Plattenelemente (2, 4) mit identischem Lochmuster versehen sind und so zueinander ausgerichtet sind, dass die Löcher der Lochmuster übereinander liegen.

2. Deckenelement (1) nach Anspruch 1, **dadurch gekennzeichnet, dass** zwischen dem ersten und dem zweiten Plattenelement (2, 4) eine Textilschicht (3) angeordnet ist.

3. Deckenelement (1) nach einem der vorangegangenen Ansprüche, **dadurch gekennzeichnet, dass** auf der von dem ersten Plattenelement (2) abgewandten Seite des zweiten Plattenelements (4) eine weitere Textilschicht (5) angeordnet ist.

4. Deckenelement (1) nach einem der vorangegangenen Ansprüche, **dadurch gekennzeichnet, dass** die Leitung (7) in einer Nut (6) angeordnet ist, die in das zweite Plattenelement (4) eingebracht ist.

5. Deckenelement (1) nach einem der vorangegangenen Ansprüche, **dadurch gekennzeichnet, dass** die Nut (6) in einer von dem ersten Plattenelement (2) abgewandten Seite des zweiten Plattenelements (4) eingebracht ist.

6. Deckenelement (1) nach einem der vorangegangenen Ansprüche, **dadurch gekennzeichnet, dass** die Nut (6) in einer dem ersten Plattenelement (2) zugewandten Seite des zweiten Plattenelements (4) eingebracht ist.

7. Deckenelement (1) nach einem der vorangegangenen Ansprüche 4 bis 6, **dadurch gekennzeichnet, dass** die Nut (6) zwischen den Löchern des Lochmusters verläuft.

8. Deckenelement (1) nach einem der vorangegangenen Ansprüche, **dadurch gekennzeichnet, dass** eine Isolierung (12) auf die von dem ersten Plattenelement (2) abgewandten Seite des zweiten Plattenelementes (4) aufgebracht ist.

9. Deckenelement (1) nach einem der vorangegangenen Ansprüche, **dadurch gekennzeichnet, dass** die Textilschicht (3, 5) die Löcher des Lochmusters verdeckt.

10. Deckenelement (1) nach einem der vorangegangenen Ansprüche, **dadurch gekennzeichnet, dass** zwischen dem ersten und dem zweiten Plattenelement (2, 4) ein Wärmeleitelement (8) angeordnet ist.

11. Deckenelement (1) nach einem der vorangegangenen Ansprüche, **dadurch gekennzeichnet, dass** das zweite Plattenelement (4) als Gipskartonplatte ausgebildet ist.

12. Deckenelement (1) nach einem der vorangegangenen Ansprüche, **dadurch gekennzeichnet, dass** das zweite Plattenelement (4) eine Schaumstruktur oder eine schaumähnliche Struktur aufweist, vorzugsweise als Blähglasplatte oder als Schaumglasplatte ausgebildet ist.

13. Deckenelement (1) nach einem der vorangegangenen Ansprüche, **dadurch gekennzeichnet, dass** das erste und/oder das zweite Plattenelement (2, 4) Zusatzstoffe zur Erhöhung der Wärmeleitfähigkeit enthält.

14. Deckenelement (1) nach einem der vorangegangenen Ansprüche, **dadurch gekennzeichnet, dass** die ersten und zweiten Plattenelemente (2, 4) formschlüssig verbunden sind.

## Claims

1. Ceiling element (1) with sound-absorbing properties, comprising first and second panel elements (2, 4) which are arranged parallel to one another, and a conduit (7) through which a heat-transfer medium can flow, wherein the first panel element (2) is designed as a plasterboard and has a perforated pattern, **characterized in that** the conduit (7) extends at least in certain portions within the second panel element (4) and the first and second panel elements (2, 4) are provided with an identical perforated pattern and are oriented with respect to one another such that the holes of the perforated pattern are situated above one another.

2. Ceiling element (1) according to Claim 1, **characterized in that** a textile layer (3) is arranged between the first and the second panel elements (2, 4).

3. Ceiling element (1) according to either of the preceding claims, **characterized in that** a further textile layer (5) is arranged on the side of the second panel element (4) which faces away from the first panel element (2).

4. Ceiling element (1) according to one of the preceding claims, **characterized in that** the conduit (7) is arranged in a groove (6) which is made in the second panel element (4).

5. Ceiling element (1) according to one of the preceding claims, **characterized in that** the groove (6) is made in a side of the second panel element (4) which faces away from the first panel element (2).

6. Ceiling element (1) according to one of the preceding claims, **characterized in that** the groove (6) is made in a side of the second panel element (4) which faces the first panel element (2).

7. Ceiling element (1) according to one of the preceding Claims 4 to 6, **characterized in that** the groove (6) extends between the holes of the perforated pattern.

8. Ceiling element (1) according to one of the preceding claims, **characterized in that** an insulation (12) is applied to the side of the second panel element (4) which faces away from the first panel element (2).

9. Ceiling element (1) according to one of the preceding claims, **characterized in that** the textile layer (3, 5) covers the holes of the perforated pattern.

10. Ceiling element (1) according to one of the preceding claims, **characterized in that** a heat-conducting element (8) is arranged between the first and the second panel elements (2, 4).

11. Ceiling element (1) according to one of the preceding claims, **characterized in that** the second panel element (4) is designed as a plasterboard.

12. Ceiling element (1) according to one of the preceding claims, **characterized in that** the second panel element (4) has a foam structure or a foam-like structure, preferably being designed as an expanded glass panel or as a foam glass panel.

13. Ceiling element (1) according to one of the preceding claims, **characterized in that** the first and/or the second panel elements (2, 4) contain additives for increasing the thermal conductivity.

14. Ceiling element (1) according to one of the preceding claims, **characterized in that** the first and second panel elements (2, 4) are connected in a form-fitting manner.

## Revendications

1. Elément de plafond (1) présentant des propriétés d'insonorisation, comprenant des premiers et des deuxièmes éléments de plaques (2, 4), qui sont disposés parallèlement les uns aux autres, et une canalisation (7) apte à être parcourue par un fluide porteur de chaleur, dans lequel le premier élément de plaque (2) se présente sous la forme d'une plaque de plâtre et présente un motif perforé, **caractérisé en ce que** la canalisation (7) s'étend au moins localement à l'intérieur du deuxième élément de plaque (4) et les premiers et les deuxièmes éléments de plaques (2, 4) sont munis de motifs perforés identiques et sont orientés les uns par rapport aux autres de telle manière que les trous des motifs perforés soient superposés.

2. Elément de plafond (1) selon la revendication 1, **caractérisé en ce qu'**une couche textile (3) est disposée entre le premier et le deuxième éléments de plaque (2, 4).

3. Elément de plafond (1) selon l'une quelconque des revendications précédentes, **caractérisé en ce qu'**une autre couche textile (5) est disposée sur la face du deuxième élément de plaque (4) située à l'opposé du premier élément de plaque (2).

4. Elément de plafond (1) selon l'une quelconque des revendications précédentes, **caractérisé en ce que** la canalisation (7) est disposée dans une rainure (6), qui est pratiquée dans le deuxième élément de plaque (4).

5. Elément de plafond (1) selon l'une quelconque des revendications précédentes, **caractérisé en ce que** la rainure (6) est pratiquée dans une face du deuxième élément de plaque (4) située à l'opposé du premier élément de plaque (2).

6. Elément de plafond (1) selon l'une quelconque des revendications précédentes, **caractérisé en ce que** la rainure (6) est pratiquée dans une face du deuxième élément de plaque (4) tournée vers le premier élément de plaque (2).

7. Elément de plafond (1) selon l'une quelconque des revendications précédentes 4 à 6, **caractérisé en ce que** la rainure (6) circule entre les trous du motif perforé.

8. Elément de plafond (1) selon l'une quelconque des revendications précédentes, **caractérisé en ce qu'**un isolant (12) est déposé sur la face du deuxième élément de plaque (4) située à l'opposé du premier élément de plaque (2).

9. Elément de plafond (1) selon l'une quelconque des revendications précédentes, **caractérisé en ce que** la couche textile (3, 5) recouvre les trous du motif perforé.

10. Elément de plafond (1) selon l'une quelconque des revendications précédentes, **caractérisé en ce qu'**un élément conducteur de la chaleur (8) est disposé entre le premier et le deuxième éléments de plaque (2, 4).

11. Elément de plafond (1) selon l'une quelconque des revendications précédentes, **caractérisé en ce que** le deuxième élément de plaque (4) se présente sous la forme d'une plaque de plâtre.

12. Elément de plafond (1) selon l'une quelconque des revendications précédentes, **caractérisé en ce que** le deuxième élément de plaque (4) présente une structure de mousse ou une structure analogue à une mousse, de préférence comme une plaque en verre gonflé ou une plaque en verre cellulaire.

13. Elément de plafond (1) selon l'une quelconque des revendications précédentes, **caractérisé en ce que** le premier et/ou le deuxième élément(s) de plaque (2, 4) contient/contiennent des matières d'addition destinées à augmenter leur conductibilité calorifique.

14. Elément de plafond (1) selon l'une quelconque des revendications précédentes, **caractérisé en ce que** les premiers et les deuxièmes éléments de plaques (2, 4) sont assemblés les uns aux autres par emboîtement.
